# EUROPÄISCHE PATENTSCHRIFT

(11) **EP 2 514 299 B1**
(45) Veröffentlichungstag und Bekanntmachung des Hinweises auf die Patenterteilung: **17.05.2017**
(21) Anmeldenummer: 12160484.7
(22) Anmeldetag: 21.03.2012
(51) Int. Cl.: A01D 75/18, A01F 29/16

(54) **Einrichtung zum Nachweis eines in eine Erntemaschine eingedrungenen Fremdkörpers**
Device for detecting a foreign body in a harvesting machine
Installation de contrôle d'un corps étranger ayant pénétré dans une moissonneuse

(30) Priorität: 21.04.2011 DE 102011007843
(43) Veröffentlichungstag der Anmeldung: 24.10.2012
(73) Patentinhaber: Deere & Company, Moline, IL 61265 (US)
(72) Erfinder: Schaefer, Martin, 66606 St. Wendel (DE); Tevs, Nikolai R., Fargo, ND North Dakota 58104 (US)
(74) Vertreter: Holst, Sönke

(56) Entgegenhaltungen:
- EP-A1- 1 731 020
- EP-A1- 1 839 478
- DE-A1-102007 017 480
- DE-A1-102009 000 351

## Beschreibung

Die Erfindung betrifft eine Einrichtung zum Nachweis eines in eine Erntemaschine eingedrungenen Fremdkörpers, mit:
einem Schwingungsaufnehmer, der schwingungsleitend mit der Achse einer Förderwalze, der ein gegenüber einer Achse drehbarer Walzenmantel zugeordnet ist, verbunden und in einem inneren Hohlraum eines innerhalb der Förderwalze an deren Achse befestigten Gehäuse aus Metall angeordnet ist,
und einer mit dem Schwingungsaufnehmer verbundenen Auswertungseinrichtung, die eingerichtet ist, ein Warnsignal abzugeben, wenn die Signale des Schwingungsaufnehmers auf einen gegen die Förderwalze prallenden Fremdkörper hinweisen.

### Stand der Technik

Bei landwirtschaftlichen Erntemaschinen besteht die Gefahr, dass störende Fremdkörper aufgenommen werden. Dies gilt insbesondere, wenn Erntegut direkt vom Boden aufgenommen wird, beispielsweise wenn ein Schwad mittels einer Pickup aufgenommen wird oder ein Schneidwerk bei geringer Schnitthöhe über den Boden geführt wird. Um Schäden an der Erntemaschine zu vermeiden, sind Nachweiseinrichtungen für derartige Fremdkörper bekannt, die ferromagnetische Eigenschaften der Fremdkörper erkennen (vgl. EP 0 702 248 A2), aber für nicht ferromagnetische Fremdkörper unempfindlich sind.

Außerdem wurde in der US 5 092 818 A vorgeschlagen, innerhalb einer unteren, vorderen Vorpresswalze eines Feldhäckslers ein in radialer Richtung zur Drehachse der Vorpresswalze sensitives Mikrofon anzubringen und mit einer Nachweiseinrichtung zu verbinden, die beim Aufprall eines Steins oder anderen Fremdkörpers an die Vorpresswalze entstehende, vom Mikrofon aufgenommene Geräusche erkennt und ggf. einen Schnellstopp der Vorpresswalzen auslöst.

Die DE 10 2008 054 488 A1 und die DE 10 2009 000 351 A1 beschreiben Nachweiseinrichtungen für Fremdkörper mit einem an der Achse der unteren, vorderen Vorpresswalze eines Feldhäckslers angebrachten, in axialer Richtung der Vorpresswalze sensitiven Schwingungsaufnehmer, der als Piezokristall oder kapazitiver oder induktiver Schwingungsaufnehmer ausgeführt ist.

In der EP 1 731 020 A1 wird ein am Boden eines Schrägförderers angebrachter Steindetektor mit einem akustischen Schwingungsaufnehmer beschrieben. In der Diskussion des Standes der Technik werden derartige Schwingungsaufnehmer mit Mittenfrequenzen von 3,1 kHz und 5 kHz erwähnt.

Die DE 10 2007 017 480 A1 beschreibt einen Schwingungsaufnehmer zur Aufnahme von Klopfgeräuschen eines Verbrennungsmotors, der als mikro-mechanisch-elektrisches System (MEMS) ausgeführt ist, welches direkt an einem Gehäuse anliegt, das am Motorblock befestigt ist.

### Aufgabe

In der US 5 092 818 A beruht die Erfassung der von einem Fremdkörper generierten Schwingungen auf Luftschall, der am Anbringungsort des Mikrofons nur schwer vom Untergrundgeräusch trennbar ist, das durch die Vielzahl der sich bewegenden Elemente der Erntemaschine erzeugt wird. Der Schwingungsaufnehmer der DE 10 2008 054 488 A1 erfasst den durch evtl. auf die Vorpresswalze aufprallende Fremdköper erzeugten Körperschall, der sich vom Mantel der Vorpresswalze über deren Lager und die Achse bis zum Schwingungsaufnehmer fortpflanzt. Auch hier stellt sich das Problem der Unterscheidung der durch Fremdkörper bedingten Signale vom Untergrund. Die dort beschriebenen, relativ großen Schwingungsaufnehmer weisen relativ niedrige obere Grenzfrequenzen auf. Der sensitive Frequenzbereich ist somit ebenfalls in hohem Maße durch das Untergrundgeräusch der Erntemaschine überlagert.

Das der Erfindung zu Grunde liegende Problem wird darin gesehen, eine gegenüber dem beschriebenen Stand der Technik verbesserte Einrichtung zum akustischen Nachweis von Fremdkörpern in einer Erntemaschine bereitzustellen.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Einrichtung zum Nachweis von eventuell in eine Erntemaschine eingedrungenen Fremdkörpern umfasst einen Schwingungsaufnehmer und eine damit verbundene Auswertungseinrichtung. Der Schwingungsaufnehmer ist schwingungsleitend mit einer Achse verbunden, gegenüber der ein Walzenmantel einer (angetriebenen oder frei mitlaufenden) Förderwalze drehbar gelagert ist. Durch die schwingungsleitende Verbindung zwischen der Achse und dem Schwingungsaufnehmer erreicht man, dass von einem auf die Förderwalze prallenden Fremdkörper angeregte Schwingungen über die Lagerung der Förderwalze auf die Achse und von dort auf den Schwingungsaufnehmer übertragen werden. Die Auswertungseinrichtung gibt ein Warnsignal ab, wenn die Signale des Schwingungsaufnehmers auf einen gegen die Förderwalze prallenden Fremdkörper hinweisen. Der Schwingungsaufnehmer ist als mikro-mechanisch-elektrisches System (MEMS) ausgeführt. Derartige Systeme weisen Abmessungen im Mikrometerbereich auf. Ihre obere Grenzfrequenz (-3 dB) liegt oberhalb von 4 kHz und höher als bei bisherigen, makroskopischen Schwingungsaufnehmern. Der Schwingungsaufnehmer ist in einem innerhalb der Förderwalze an deren Achse befestigten Gehäuse aus Metall angeordnet. Dort wird er auf einer mit dem Gehäuse schwingungsleitend verbundenen Platine befestigt, auf der auch die Auswertungseinrichtung angeordnet sein kann. Um eine dämpfungsarme Übertragung der hochfrequenten Schwingungen vom Gehäuse auf die Platine zu ermöglichen, ist diese mit dem Gehäuse verklebt. Die Platine liegt mit ihren seitlichen Rändern an Vorsprüngen des Gehäuses an und ist dort durch Verklebungen fixiert.

Der Schwingungsaufnehmer ist somit in einem Frequenzbereich sensitiv, in dem die Grund- und Oberschwingungen (d. h. Resonanzfrequenzen) von durch harte Fremdkörpern ausgelösten Schwingungen der Achse liegen. Die Untergrundgeräusche der Erntemaschine liegen zum großen Teil in einem niedrigeren Frequenzbereich, der durch die Auswertungseinrichtung unberücksichtigt bleibt, was den Signal-Rausch-Abstand verbessert und eine sicherere Erkennung auch von nicht-ferromagnetischen Fremdkörpern ermöglicht.

Die Sensitivitätsrichtung des Schwingungsaufnehmers kann entlang der Längsrichtung der Achse liegen oder orthogonal dazu.

Die vorliegende Erfindung eignet sich für beliebige Erntemaschinen, bei denen aufgenommenes Erntegut mittels einer Förderwalze transportiert wird. Beispiele sind Feldhäcksler, Ballenpressen und Mähdrescher. Der Signalausgang der Auswertungseinrichtung ist vorzugsweise mit einer Schnellstoppeinrichtung zum Anhalten eines Einzugsförderers der Erntemaschine verbunden, so dass im Fall eines nachgewiesenen, eingedrungenen Fremdkörpers Schäden an der Erntemaschine durch rechtzeitiges Anhalten des Einzugsförderers vermieden werden können. Auch wird vermieden, dass das von der Erntemaschine abgegebene Erntegut durch den Fremdkörper verunreinigt wird.

### Ausführungsbeispiel

In den Zeichnungen ist ein nachfolgend näher beschriebenes Ausführungsbeispiel der Erfindung dargestellt. Es zeigt:
- Fig. 1: eine Erntemaschine mit einer erfindungsgemäßen Einrichtung in Seitenansicht und in schematischer Darstellung,
- Fig. 2: eine Explosionsdarstellung einer Förderwalze und eines Gehäuses eines Schwingungsaufnehmers,
- Fig 3.: einen vergrößerten Schnitt durch die Achse und das Gehäuse des Schwingungsaufnehmers, und
- Fig. 4: ein schematisches Schaltdiagramm der Auswertungseinrichtung.

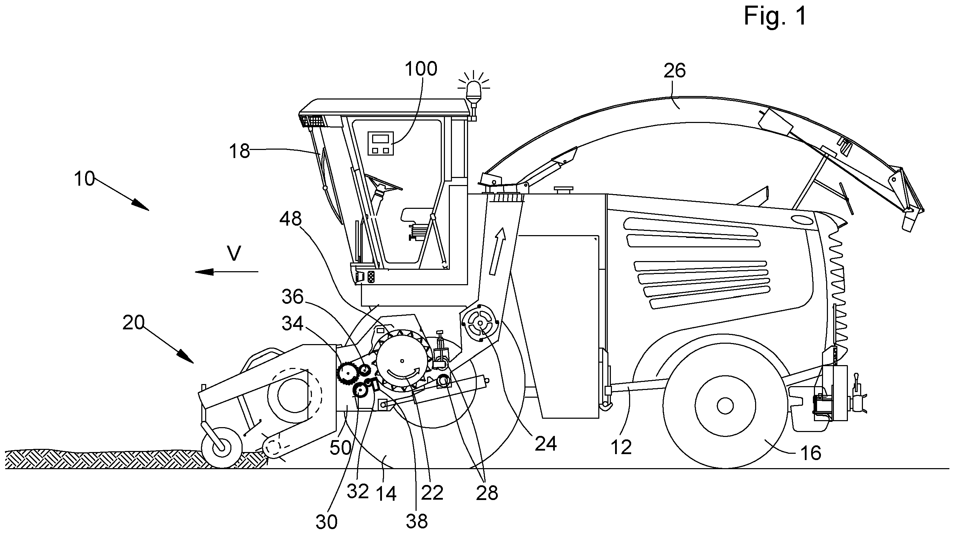

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 in Form einer Pickup einsehbar ist. Mittels der Erntegutaufnahmevorrichtung 20 vom Boden aufgenommenes Gut, z. B. Gras oder dergleichen, wird einer mit Häckselmessern 48 besetzten Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 befindet sich eine Nachzerkleinerungsvorrichtung 28, durch die das zu fördernde Gut der Fördervorrichtung 24 tangential zugeführt wird.

Zwischen der Erntegutaufnahmevorrichtung 20 und der Häckseltrommel 22 wird das Gut durch einen Einzugsförderer mit unteren Förderwalzen 30, 32 und oberen Förderwalzen 34, 36 transportiert, die innerhalb eines Einzugsgehäuses 50 angebracht sind. Die Förderwalzen 30 bis 36 werden auch als Vorpresswalzen bezeichnet, da die oberen Förderwalzen 34, 36 durch Federkraft gegen die unteren Förderwalzen 30, 32 vorgespannt sind, damit das Erntegut zwischen den Förderwalzen 30 bis 36 vorverdichtet wird und besser geschnitten werden kann. Die über den Umfang der Häckseltrommel 22 verteilten Häckselmesser 48 wirken mit einer Gegenschneide 38 zusammen, um das Gut zu häckseln.

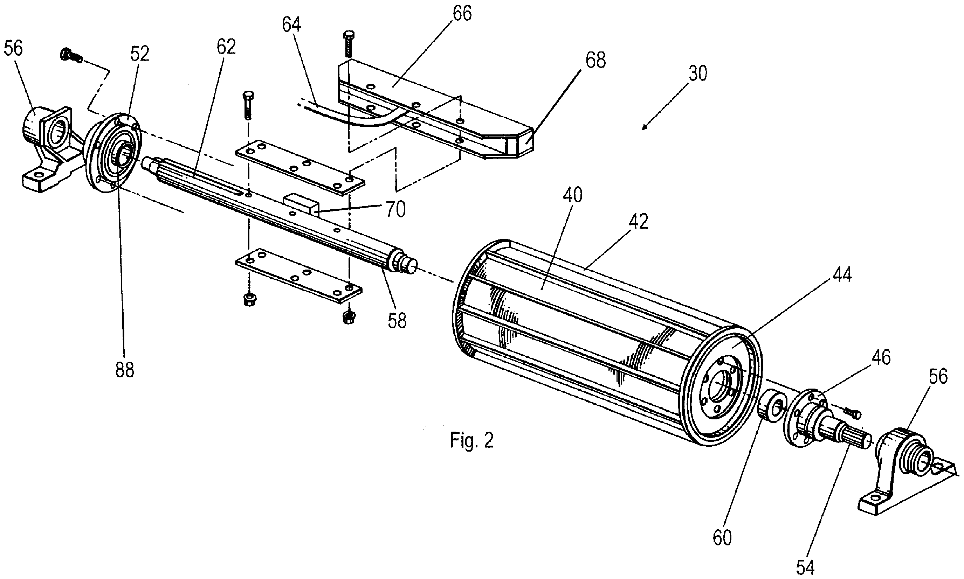

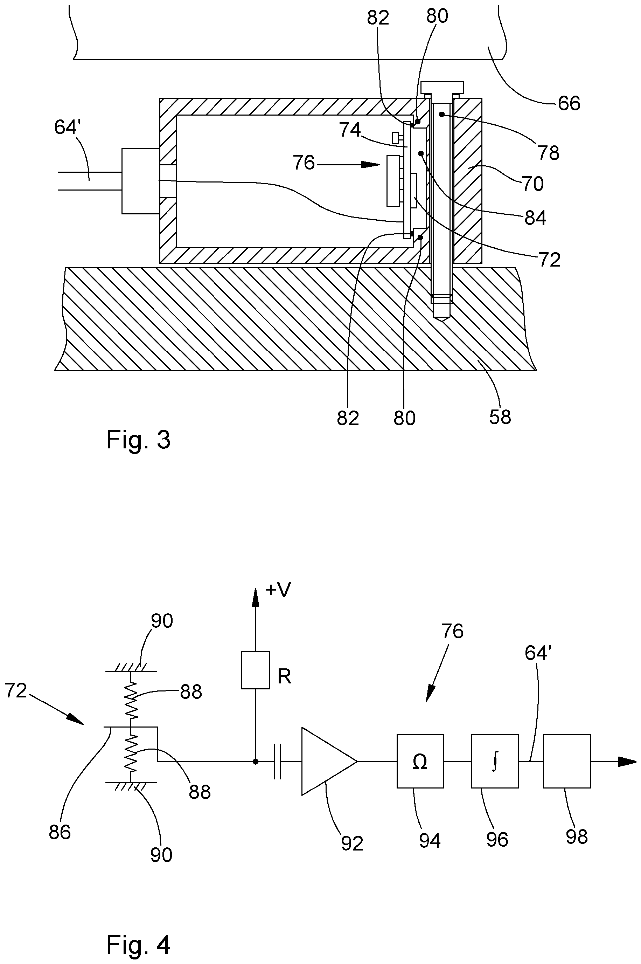

Die Figur 2 zeigt eine Explosionsdarstellung der vorderen, unteren Förderwalze 30. Sie umfasst einen Walzenmantel 40 mit kreisförmigem Querschnitt, um dessen Umfang sich axial erstreckende Mitnehmer 42 verteilt sind. An den Stirnseiten ist der Walzenmantel 40 mit radialen Stützscheiben 44 versehen. Die in der Figur 2 rechts eingezeichnete Stützscheibe 44 ist in ihrer Mitte durch Schrauben mit einem kreisförmigen Flansch 46 verbindbar. Der Flansch 46 ist starr mit einer mittigen Welle 54 verbunden, die somit drehfest mit dem zugehörigen Walzenmantel 40 gekoppelt ist. Die Welle 54 ist ihrerseits in einem rechten Lagerbock 56 drehbar abgestützt, der wiederum am Rahmen 12 befestigt ist. Die Welle 54 (und somit die Förderwalze 30) ist an ihrer profilierten Stirnseite außerhalb des Lagerbocks 56 über einen geeigneten Antrieb (nicht gezeigt) in Drehung versetzbar. Ein in der Figur 2 links eingezeichneter Flansch 52 ist mit der ihm benachbarten Stützscheibe 44 (nicht sichtbar) verschraubt und mit einer mittigen, drehbaren Lagerung 88 versehen. Eine im Innenraum des Walzenmantels 40 angeordnete Achse 58 erstreckt sich durch die Lagerung des Flanschs 52 und durch einen linken Lagerbock 56. Die Achse 58 dreht sich nicht mit der Förderwalze 30 mit. Die Achse 58 ist an ihrem rechten Ende in einer weiteren Lagerung 60 gegenüber der Welle 54 und dem Flansch 46 drehbar abgestützt. In der Achse 58 ist am linken Ende eine axiale Bohrung vorgesehen, die in einen Schlitz 62 ausläuft, um ein Kabel 64 durch die Achse 58 in das Innere des Walzenmantels 40 zu führen. Etwa mittig auf der Achse 58 ist ein Träger 66 durch Schrauben an der Achse 58 befestigt, der einen Metalldetektor 68 hält. Der Metalldetektor 68 umfasst in an sich bekannter Weise eine Anzahl an Permanentmagneten und Spulen sowie eine Auswertungselektronik, die ggf. die sich beim Eintritt eines ferromagnetischen Körpers in den Spalt zwischen den Vorpresswalzen 34 und 30 in den Spulen induzierten Spannungen erfasst. Außerdem ist an der Achse 58 ein Gehäuse 70 befestigt, das einen Schwingungsaufnehmer 72 (s. Figur 3 und 4) aufnimmt. Im montierten Zustand erstrecken sich das Gehäuse 70 und der Metalldetektor 66 von der Achse 58 nach oben, damit der Metalldetektor 68 den Spalt zwischen den Vorpresswalzen 34 und 30 sensorisch auf ferromagnetische Fremdkörper überwachen kann.

Es sei noch angemerkt, dass das Gehäuse 70 auch außerhalb der Förderwalze 30 beispielsweise an einem der Lagerböcke 56 oder einer anderen, den Lagerungen 60, 88 hinreichend nahe benachbarten Stelle der Erntemaschine 10 angebracht werden könnte.

Die Figur 3 zeigt eine vergrößerte Schnittansicht des Gehäuses 70 mit dem Schwingungsaufnehmer 72 und der zugehörigen Auswertungseinrichtung 76 in einem vertikalen Schnitt in Längsrichtung der Achse 58. Das Gehäuse 70 ist durch eine Schraube 78, die sich in eine Gewindebohrung in der Achse 58 erstreckt, an der Achse 58 fixiert. Es könnten auch mehr als die eine hier gezeigte Schraube vorgesehen sein. Das Gehäuse 70 ist aus Metall und weist einen inneren Hohlraum auf, in dem eine Platine 74 angeordnet ist. Die Platine 74 liegt mit ihren seitlichen Rändern an Vorsprüngen 80 an und ist dort durch Verklebungen 82 fixiert. Der Schwingungsaufnehmer 72 ist auf der Rückseite der Platine 74 angebracht und somit geschützt innerhalb eines Hohlraums 84 positioniert. Die Vorderseite der Platine 74 trägt die elektronischen Komponenten der Auswertungseinrichtung 76, die mit einem weiteren Kabel 64' verbunden ist, das sich wie das Kabel 64 durch den Schlitz 62 der Achse 58 erstreckt.

Der Schwingungsaufnehmer 72 ist als so genanntes mikro-mechanisch-elektrisches System (MEMS) ausgeführt. Er umfasst eine Masse 86, die in einer Bewegungsrichtung durch Federn 88 an einem Substrat 90 aufgehängt ist. Die Masse 86 und die Federn 88 sind nur einige µm breit und lang und durch Mikrotechniken aus dem aus einem geeigneten Material, wie Silizium, bestehenden Substrat 90 hergestellt, insbesondere durch photolithografisches Aufbringen einer Maske und Wegätzen der nicht abgedeckten Teile des Substrats 90. Derartige mikro-mechanisch-elektrische Schwingungsaufnehmer sind im Stand der Technik bekannt, wozu beispielsweise auf die Offenbarung der DE 10 2007 017 480 A1 und den dort zitierten Stand der Technik verwiesen wird, deren Offenbarungen durch Verweis mit in die vorliegenden Unterlagen aufgenommen werden.

Wird die Achse 58 und das (über das Gehäuse 70 und die Platine 74) schwingungsleitend damit verbundene Substrat 90 in radialer Richtung der Förderwalze 30 beschleunigt, bleibt die Masse 86 aufgrund ihrer Massenträgheit zunächst stationär und setzt sich aufgrund der Elastizität der Federn 88 erst zeitverzögert in Bewegung. Die Relativbewegung zwischen dem Substrat 90 und der Masse 86 führt zu einer Änderung der Kapazität zwischen dem Substrat 90 und der Masse 86. Indem an die Masse 86 über einen hochohmigen Widerstand R eine Gleichspannung V angelegt wird, lassen sich Kapazitätsänderungen der Masse 86 als Spannungsänderungen nachweisen und in einem Verstärker 92 verstärken. Das Ausgangssignal des Verstärkers 92 ist eine von der Auslenkung der Masse 86 abhängige Spannung. Der Verstärker 92 kann monolithisch mit auf dem Schwingungsaufnehmer 72 integriert oder separat ausgeführt werden.

Die Auswertungseinrichtung 76 umfasst neben dem Verstärker 92 eine Signalkonditionierung, die beispielsweise ein Bandpassfilter 94 und einen Schwellwertschalter 96 umfassen kann. Der Ausgang des Schwellwertschalters 96 ist durch das Kabel 64' mit einer Steuereinrichtung 96 verbunden, die bei Abgabe eines Haltesignals durch den Schwellwertschalter 96 den Antrieb der Förderwalzen 30 bis 36 mit einer sehr kleinen Zeitverzögerung anhält. Dies kann durch eine Sperrklinke erfolgen, die zur mechanischen Arretierung des Antriebs der Förderwalzen 30 bis 36 dient, oder durch Unterbinden bzw. Umkehren der Flussrichtung des hydraulischen Flusses durch einen die Förderwalzen 30 bis 36 antreibenden Hydromotor, wie in der DE 10 2008 040 357 A1 beschrieben. Die Steuereinrichtung 96 ist auch mit dem Ausgang des Metalldetektors 68 verbunden.
Anstelle des Bandpassfilters 94 und des Schwellwertschalters 96 kann eine beliebige andere Signalkonditionierung verwendet werden, die im Zeitbereich (beispielsweise mittels eines Bandpassfilters) oder Frequenzbereich (beispielsweise mittels einer schnellen Fouriertransformation, FFT) und rein analog oder (nach Digitalisierung) rein digital arbeiten kann.

Die Funktionsweise der dargestellten Einrichtung zum Nachweis von eventuell in die Erntemaschine 10 eingedrungenen Fremdkörpern beruht darauf, dass ggf. gegen die Förderwalze 30 prallende Steine oder andere Fremdkörper beim Aufprall mechanische Vibrationen erzeugen, die sich über den Walzenmantel 40, die Stützscheiben 44, die Flansche 46 bzw. 52, die Lagerungen 60 und 88, die Achse 58, das Gehäuse 70 und die Platine 74 bis zum Substrat 90 des Schwingungsaufnehmers 72 ausbreiten. Da keine elastischen Elemente, wie Gummipuffer o.ä. in den Weg der Vibrationen eingefügt sind, erreichen die relativ hochfrequenten (im kHz-Bereich liegenden) Vibrationen den Schwingungsaufnehmer 72 im Wesentlichen ungedämpft. Die Vibrationen werden durch die Masse 86 des Schwingungsaufnehmers 72 in Kapazitäts- und Spannungsänderungen umgesetzt und durch den Verstärker verstärkt. Durch das Bandpassfilter 94 werden im Wesentlichen nur Frequenzen durchgelassen, die bei aufprallenden Fremdkörpern auftreten, jedoch relativ wenig durch Vibrationen der Erntemaschine 10 produzierter Untergrund. Der Schwellwertschalter 96, der eine durch den Bediener über eine Anzeige- und Eingabeeinrichtung 100 verstellbare Empfindlichkeit haben kann, spricht an, wenn ein Fremdkörper nachgewiesen wurde und gibt dann ein Haltesignal an die Steuereinrichtung 98 und eine Information an den Bediener über die Anzeige- und Eingabeeinrichtung 100.

Durch die Verwendung eines mikro-mechanisch-elektrischen Systems als Schwingungsaufnehmer 72 kann eine wesentlich höhere obere Grenzfrequenz als bei konventionellen, mechanischen Schwingungsaufnehmern erreicht werden. Eine mögliche obere Grenzfrequenz beträgt 4 kHz. Bei diesen Frequenzen liegen die beim Aufprallen harter Fremdkörper (Steine) auf die Förderwalze 30 entstehenden Grund- und Oberwellen. Der Durchlassbereich des Bandpassfilters 94 wird entsprechend hoch gelegt, sodass die beim Aufprall entstehenden Grund- und Oberwellen durchgelassen werden. Somit werden der Signal/Geräusch-Abstand und die Nachweiswahrscheinlichkeit verbessert.

## Patentansprüche

1. Einrichtung zum Nachweis eines in eine Erntemaschine (10) eingedrungenen Fremdkörpers, mit:
einem Schwingungsaufnehmer (72), der schwingungsleitend mit der Achse (58) einer Förderwalze (30), der ein gegenüber einer Achse (58) drehbarer Walzenmantel (40) zugeordnet ist, verbunden und in einem inneren Hohlraum eines innerhalb der Förderwalze (30) an deren Achse (58) befestigten Gehäuse (70) aus Metall angeordnet ist,
und einer mit dem Schwingungsaufnehmer (72) verbundenen Auswertungseinrichtung (76), die eingerichtet ist, ein Warnsignal abzugeben, wenn die Signale des Schwingungsaufnehmers (72) auf einen gegen die Förderwalze (30) prallenden Fremdkörper hinweisen,
**dadurch gekennzeichnet, dass** der Schwingungsaufnehmer (72) ein mikro-mechanisch-elektrisches System (MEMS) und in einem Frequenzbereich oberhalb von 4 kHz sensitiv ist, in dem die Resonanzfrequenz von durch harte Fremdkörpern ausgelösten Schwingungen der Achse (58) liegt,
und dass der Schwingungsaufnehmer (72) auf einer mit dem Gehäuse (70) schwingungsleitend verbundenen Platine (74) befestigt ist, welche mit ihren seitlichen Rändern an Vorsprüngen (80) des Gehäuses (70) anliegt und dort durch Verklebungen (82) fixiert ist.

2. Einrichtung nach Anspruch 1, **dadurch gekennzeichnet, dass** auf der Platine (74) auch die Auswertungseinrichtung (76) angeordnet ist.

3. Erntemaschine (10), insbesondere Feldhäcksler, mit einer Einrichtung nach einem der vorhergehenden Ansprüche, deren Signalausgang mit einer Schnellstoppeinrichtung zum Anhalten eines Einzugsförderers (30 bis 36) der Erntemaschine (10) verbunden ist.

## Claims

1. Device for detecting a foreign body that has penetrated into a harvesting machine (10), comprising:
a vibration sensor (72) which is connected in a vibrating-conducting manner to the shaft (58) of a conveyor roller (30), which is assigned a roller shell (40) that can be rotated with respect to a shaft (58), and is arranged in an internal cavity of a metal housing (70) fixed to the axle (58) of the conveyor roller, within the conveyor roller (30),
and an evaluation device (76) which is connected to the vibration sensor (72) and which is designed to emit a warning signal when the signals from the vibration sensor (72) indicate a foreign body striking the conveyor roller (30),
**characterized in that** the vibration sensor (72) is a micromechanical electric system (MEMS) and is sensitive in a frequency range above 4 kHz, in which the resonant frequency of vibrations of the shaft (58) that are triggered by hard foreign bodies lies,
and **in that** the vibration sensor (72) is fixed to a circuit board (74) which is connected in a vibration-transmitting manner to the housing (70), rests with its lateral edges on projections (80) of the housing (70) and is fixed there by adhesive bonds (82).

2. Device according to Claim 1, **characterized in that** the evaluation device (76) is also arranged on the circuit board (74).

3. Harvesting machine (10), in particular forage harvester, having a device according to one of the preceding claims, the signal output of which is connected to a rapid stop device for stopping an infeed conveyor (30 to 36) of the harvesting machine (10).

## Revendications

1. Dispositif de contrôle d'un corps étranger ayant pénétré dans une moissonneuse (10), comportant :
un capteur de vibrations (72) qui est relié de manière conductrice des vibrations à l'axe (58) d'un rouleau de transport (30) associé à une enveloppe de rouleau (40) pouvant être mise en rotation par rapport à un axe (58) et est disposé dans une cavité interne d'un boîtier (70) métallique fixé à l'axe (58) à l'intérieur du rouleau de transport (30),
et un dispositif d'évaluation (76) relié au capteur de vibrations (72), qui est conçu pour délivrer un signal d'alarme lorsque les signaux du capteur de vibrations (72) indiquent qu'un corps étranger heurte le rouleau de transport (30),
**caractérisé en ce que** le capteur de vibrations (72) est un système microélectromécanique (MEMS) et est sensible dans une plage de fréquences située au-dessus de 4 kHz, dans laquelle se situe la fréquence de résonnance des vibrations de l'axe (58) déclenchées par des corps étrangers durs,
et **en ce que** le capteur de vibrations (72) est fixé sur une carte (74) reliée de manière conductrice des vibrations au boîtier (70), laquelle carte repose par ses bords latéraux sur des protubérances (80) du boîtier (70) et y est fixée par des points de collage (82).

2. Dispositif selon la revendication 1, **caractérisé en ce que** le dispositif d'évaluation (76) est également disposé sur la carte (74).

3. Moissonneuse (10), notamment ensileuse, comportant un dispositif selon l'une quelconque des revendications précédentes, dont la sortie de signal est reliée à un dispositif d'arrêt d'urgence permettant d'arrêter une ramasseuse (30 à 36) de la moissonneuse (10).
